# FASCICULE DE BREVET EUROPEEN

(11) **EP 0 848 184 B1**
(45) Date de publication et mention de la délivrance du brevet: **07.02.2001**
(21) Numéro de dépôt: 97403039.7
(22) Date de dépôt: 15.12.1997
(51) Int. Cl.: F16F 13/14

(54) **Support antivibratoire hydraulique**
Hydraulisches, schwingungsdämpfendes Lager
Hydraulic anti-vibration support

(30) Priorité: 16.12.1996 FR 9615423
(43) Date de publication de la demande: 17.06.1998
(73) Titulaire: HUTCHINSON, 75008 Paris (FR)
(72) Inventeur: Bellamy, Alain, 51100 Naveil (FR); Reh, Denis, 28200 Thiville (FR); Allaire, Pierre, 28200 Chateaudun (FR)
(74) Mandataire: Burbaud, Eric

(56) Documents cités:
- EP-A- 0 382 851
- EP-A- 0 533 214
- EP-A- 0 646 735
- EP-A- 0 709 594

## Description

La présente invention est relative aux supports antivibratoires hydrauliques destinés à être interposés entre deux éléments rigides pour amortir des vibrations entre ces deux éléments, essentiellement selon un axe principal de vibration, et pour supporter un effort statique prédéterminé parallèlement à cet axe.

Les deux éléments rigides en question peuvent être par exemple un châssis et un moteur de véhicule automobile.

Parmi les supports antivibratoires de ce type, l'invention concerne plus particulièrement ceux qui comportent :
- des première et deuxième armatures rigides solidarisables respectivement avec les deux éléments rigides à réunir, la deuxième armature s'étendant perpendiculairement à l'axe principal de vibration,
- un corps en élastomère reliant entre elles les deux armatures, ce corps en élastomère présentant une paroi épaisse en forme de cloche qui s'étend en divergeant depuis un sommet solidaire de la première armature jusqu'à une base solidaire de la deuxième armature, cette paroi présentant, vue en section selon un plan perpendiculaire à l'axe principal de vibration, un contour qui présente quatre côtés formant sensiblement un rectangle (parallélogramme à angle droit), le corps en élastomère comportant en outre un bossage en élastomère qui s'étend au centre de la paroi épaisse en forme de cloche en faisant saillie depuis le sommet de cette paroi vers la deuxième armature, ce bossage présentant quatre faces latérales orientées chacune vers un côté de la paroi épaisse en forme de cloche,
- une chambre de travail délimitée d'une part par la paroi épaisse en forme de cloche et d'autre part par une paroi rigide qui est solidaire de la deuxième armature et qui forme une contre-butée pour le bossage susmentionné,
- une chambre de compensation délimitée au moins partiellement par une paroi souple et communiquant en permanence avec la chambre de travail par l'intermédiaire d'un canal étranglé, la chambre de travail ainsi que la chambre de compensation et le canal étranglé étant remplis d'un liquide.

Le document EP-0 646 735 décrit un exemple d'un tel support antivibratoire.

Les supports de ce type donnent entière satisfaction, mais peuvent dans certaines configurations présenter une raideur dynamique relativement élevée pour de hautes fréquences de vibration, par exemple à environ 640 Hz, ce qui diminue le filtrage des vibrations à cette fréquence.

La présente invention a notamment pour but de pallier cet inconvénient.

A cet effet, selon l'invention, un support antivibratoire hydraulique du genre en question est essentiellement caractérisé en ce qu'au moins deux des faces latérales du bossage, opposées l'une à l'autre, présentent une forme concave dans tout plan qui les coupe perpendiculairement à l'axe principal de vibration, le bossage présentant ainsi une partie centrale étroite encadrée par deux portions d'extrémité plus épaisses.

Dans des modes de réalisation préférés de l'invention, on peut éventuellement avoir recours en outre à l'une et/ou à l'autre des dispositions suivantes :
- la partie centrale étroite du bossage présente une première épaisseur tandis que les portions d'extrémité du bossage présentent chacune une deuxième épaisseur supérieure à la première épaisseur, avec une différence supérieure à 5mm entre les première et deuxième épaisseurs;
- le bossage présente une section droite, perpendiculaire à l'axe principal de vibration, qui a une aire supérieure à 150 mm² ;
- les deux côtés de la paroi épaisse en forme de cloche, qui sont situés en regard des faces latérales concaves du bossage en élastomère, sont plus longs que les deux autres côtés de ladite paroi épaisse en forme de cloche ;
- la deuxième armature est constituée par une plaque qui s'étend selon un plan général perpendiculaire à l'axe principal de vibration et qui présente une face dite de support, le corps en élastomère formant une seule pièce avec la paroi souple qui délimite la chambre de compensation, et ce corps en élastomère étant fixé de façon étanche sur la face de support de la deuxième armature en délimitant avec celle-ci la chambre de travail, la chambre de compensation et le canal étranglé,
- la deuxième armature comporte un bossage qui fait saillie vers la chambre de travail en regard du bossage du corps en élastomère ;
- le bossage du corps en élastomère présente une longueur sensiblement comprise entre 2,3 et 2,7 cm ;
- chaque côté de la paroi épaisse en forme de cloche, qui est disposé en regard d'une face latérale concave du bossage du corps en élastomère, est séparé des portions d'extrémité de ce bossage par une distance qui, mesurée perpendiculairement à l'axe principal de vibration, est sensiblement comprise entre 0,8 et 1 cm.
- le bossage du corps en élastomère présente une hauteur, mesurée parallèlement à l'axe principal de vibration, qui est sensiblement comprise entre 0,8 et 1,2 cm.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue en coupe verticale d'un support antivibratoire hydraulique selon une forme de réalisation de l'invention,
- la figure 2 est une vue en coupe selon la ligne II-II de la figure 1,
- et la figure 3 est un diagramme montrant la raideur dynamique du support antivibratoire de la figure 1 comparée à la raideur dynamique d'un support antivibratoire similaire doté d'une butée inférieure parallélépipédique.

Dans la description qui suit, les termes tels que "haut", "bas", "supérieur", "inférieur", "vertical", "horizontal" sont donnés en référence à la position d'utilisation la plus courante du support antivibratoire selon l'invention, mais ne sont pas limitatifs.

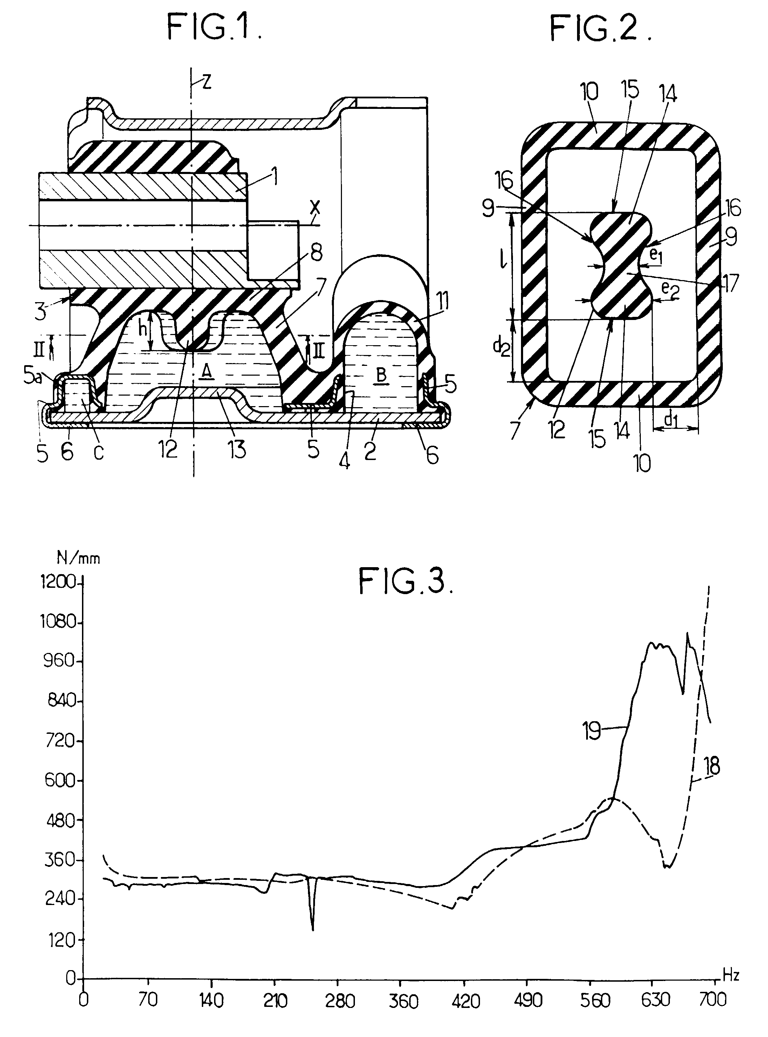

Le support antivibratoire hydraulique représenté sur les figures 1 et 2 comporte des première et deuxième armatures métalliques rigides 1 et 2 qui sont reliées entre elles par un corps en élastomère 3 et qui sont destinées à être interposées entre deux éléments rigides (non représentés) aux fins d'amortissement et de liaison.

La première armature 1 est destinée à être solidarisée avec une charge à supporter, par exemple un groupe motopropulseur de véhicule. Dans l'exemple représenté sur les dessins, cette première armature présente la forme d'un organe allongé tubulaire, qui s'étend longitudinalement selon un axe X sensiblement horizontal.

La deuxième armature 2, quant à elle, est une platine de forme générale plane au moins par morceaux, qui est généralement destinée à être fixée au châssis du véhicule, par exemple par l'intermédiaire de trous de fixation ménagés dans des pattes latérales (non représentées) de cette platine, par exemple comme décrit dans le document EP-A-0 646 735 ou dans le document EP-A-0 709 594.

Cette deuxième armature 2 s'étend perpendiculairement à un axe vertical Z qui représente, d'une part, la direction d'application du poids du groupe motopropulseur sur la première armature, et d'autre part, la direction principale des vibrations à amortir.

Par ailleurs, le corps en élastomère 3 présente une base 4 relativement large solidarisée de façon étanche avec la deuxième armature 2, notamment au moyen d'une plaque métallique ajourée 5, qui est noyée dans ladite base et qui présente des pattes 6 serties sur les bords de la deuxième armature 2.

Comme divulgué dans les documents susmentionnés, EP-A-0 646 735 et EP-A-0 709 594, la face inférieure de la base 4 du corps en élastomère est creusée de façon à former avec la face supérieure de la deuxième armature 2:
- une chambre de travail A remplie de liquide, qui est délimitée partiellement par une paroi latérale épaisse 7 en forme de cloche s'étendant en convergeant depuis la base 4 jusqu'à un sommet 8 solidaire de la première armature 1, cette paroi latérale 7 présentant, vue en section dans un plan horizontal, un contour rectangulaire présentant deux grands côtés 9 et deux petits côtés 10 parallèles à l'axe X (ou éventuellement quatre côtés de même longueur),
- une chambre de compensation B également remplie de liquide, qui est délimitée par une paroi fine 11 aisément déformable appartenant au corps en élastomère,
- et un canal étranglé C, lui-même rempli de liquide, qui relie entre elles les chambres A et B et qui est délimité par une gorge dont la forme est de préférence définie au moins partiellement par un emboutissage 5a de la plaque ajourée 5.

Par ailleurs, afin de limiter les déplacements relatifs des première et deuxième armatures 1 et 2 l'une vers l'autre, le corps en élastomère 3 comporte un bossage 12 qui fait saillie vers le bas dans la chambre de travail A à partir du sommet 8 du corps en élastomère, ce bossage étant de préférence disposé en regard d'une surélévation 13 ménagée par emboutissage dans la deuxième armature 2.

Le bossage 12 peut présenter une hauteur h comprise par exemple entre 0,8 et 1, 2 cm. De plus, le bossage 12, vu en section dans un plan horizontal, présente une forme allongée parallèlement au grand côté 9 de la paroi latérale 7 de la chambre de travail, et s'étend longitudinalement entre deux extrémités 14.

Ces deux extrémités 14 présentent respectivement des faces d'extrémité 15 verticales qui sont disposées en regard des petits côtés 10 de la paroi latérale 7, et le bossage 12 présente par ailleurs deux autres faces latérales 16 verticales qui sont disposées vers les grands côtés 9 de la paroi latérale 7 et qui présentent chacune une forme concave, vues en section dans tout plan horizontal qui recoupe lesdites faces latérales.

Ainsi, les deux extrémités 14 du bossage 12 sont séparées l'une de l'autre par une partie centrale 17 étroite, qui présente parallèlement à l'axe X une épaisseur el inférieure à l'épaisseur e2 des extrémités 14.

De préférence, la différence entre les épaisseurs el et e2 est supérieure à 5 mm, l'aire total de la section horizontale du bossage 12 restant de préférence supérieure à 150 mm².

Le dispositif qui vient d'être décrit fonctionne comme suit :
- lorsque les deux armatures 1 et 2 sont soumises à des oscillations de relativement grande amplitude et de relativement faible fréquence (par exemple inférieure à 20 Hz), ces oscillations provoquent des transferts de liquide entre les chambres A et B par l'intermédiaire du canal étranglé C, et ces transferts de liquide tendent à amortir les mouvements oscillatoires du fait des pertes de charge du liquide dans le canal étranglé,
- lorsque les deux armatures 1 et 2 sont soumises à des mouvement vibratoires relatifs de faible amplitude et de grande fréquence (par exemple supérieurs à 20 Hz et jusqu'à environ 650 Hz), les vibrations en question sont absorbées par la souplesse du support antivibratoire et ne sont pas transmises d'une armature à l'autre.

Ce filtrage efficace des vibrations de haute fréquence est obtenu grâce à la faible raideur dynamique du support antivibratoire jusqu'à des fréquences de l'ordre de 650 Hz, comme représenté par la courbe 18 sur la figure 3.

A titre de comparaison, la courbe 19 montre la raideur dynamique d'un support antivibratoire similaire dont le bossage 12 ne comporterait pas de partie centrale rétrécie 17 : on voit que le support antivibratoire présente alors un pic de raideur dynamique à partir d'environ 600 Hz, de sorte que ce support ne filtre pas efficacement les vibrations au-delà de 600 Hz, alors que le support antivibratoire selon l'invention filtre les vibrations jusqu'à environ 650 Hz.

Ce phénomène est dû au fait qu'en l'absence de la partie centrale rétrécie 17 du bossage 12, il se produit à partir d'environ 600 Hz des phénomènes de résonance dans les deux colonnes de liquide situées respectivement entre ce bossage 12 et les deux grands côtés 9 de la paroi latérale 7, chacune de ces colonnes de liquide s'étendant au moins sur une partie de la hauteur du bossage 12, sur la longeur l de ce bossage (par exemple environ 2,3 à 2,7 cm) et sur la largeur d1 laissée libre entre ce bossage et le côté 9 de la paroi latérale 7 (par exemple, 0,8 à 1 cm sensiblement au milieu de la hauteur du bossage 12).

Au contraire, lorsque le bossage 12 possède une partie centrale rétrécie 17, la section des deux colonnes de liquide susmentionnées est augmentée, de sorte que le phénomène de résonance susmentionné ne se produit plus.

On notera enfin que dans le cas présent, la distance d2 entre les faces d'extrémité 15 du bossage 12 et les petits côtés 10 de la paroi latérale 7 est supérieure à la distance dl sensiblement au milieu de la hauteur du bossage 12 (par exemple, d2 peut valoir 1,3 à 1,5 cm) de sorte que les phénomènes de résonance susmentionnés ne se produisent pas dans les colonnes de liquide situées respectivement entre les faces 15 et les petits côtés 10 de la paroi latérale 7.

Toutefois, si les faces d'extrémité 15 en question étaient situées plus près des petits côtés 10 de la paroi latérale 7, il pourrait éventuellement être avantageux de rendre également concaves ces faces d'extrémité 15 pour éviter des phénomènes de résonance similaires à ceux mentionnés ci-dessus.

## Revendications

1. Support antivibratoire hydraulique destiné à être interposé entre deux éléments rigides pour amortir des vibrations entre ces deux éléments, essentiellement selon un axe principal de vibration (Z), et pour supporter un effort statique parallèlement à cet axe, ce support comportant :
- des première et deuxième armatures rigides (1,2) solidarisables respectivement avec les deux éléments rigides à réunir, la deuxième armature s'étendant perpendiculairement à l'axe principal de vibration (Z),
- un corps en élastomère (3) reliant entre elles les deux armatures (1,2), ce corps en élastomère présentant une paroi épaisse (7) en forme de cloche qui s'étend en divergeant depuis un sommet (8) solidaire de la première armature (1) jusqu'à une base (4) solidaire de la deuxième armature (2), cette paroi présentant, vue en section selon un plan perpendiculaire à l'axe principal de vibration (Z), un contour qui présente quatre côtés (9,10) formant sensiblement un rectangle, le corps en élastomère comportant en outre un bossage (12) en élastomère qui s'étend au centre de la paroi épaisse (7) en forme de cloche en faisant saillie depuis le sommet (8) de cette paroi vers la deuxième armature (2), ce bossage présentant quatre faces latérales (15,16) orientées chacune vers un côté (9, 10) de la paroi épaisse en forme de cloche,
- une chambre de travail (A) délimitée d'une part par la paroi épaisse (7) latérale en forme de cloche et d'autre part par une paroi rigide qui est solidaire de la deuxième armature et qui forme une contre-butée pour le bossage susmentionné,
- une chambre de compensation (B) délimitée au moins partiellement par une paroi souple et communiquant en permanence avec la chambre de travail (A) par l'intermédiaire d'un canal étranglé (C), la chambre de travail (A) ainsi que la chambre de compensation (B) et le canal étranglé (C) étant remplis d'un liquide,
**caractérisé en ce qu**'au moins deux (16) des faces latérales du bossage, opposées l'une à l'autre, présentent une forme concave dans tout plan qui les coupe perpendiculairement à l'axe principal de vibration (Z), le bossage présentant ainsi une partie centrale (17) étroite encadrée par deux portions d'extrémité (14) plus épaisses.

2. Support antivibratoire selon la revendication 1, dans lequel la partie centrale étroite (17) du bossage présente une première épaisseur (el) tandis que les portions d'extrémité (14) du bossage présentent chacune une deuxième épaisseur (e2) supérieure à la première épaisseur, avec une différence supérieure à 5 mm entre les première et deuxième épaisseurs.

3. Support antivibratoire selon l'une quelconque des revendications 1 et 2, dans lequel le bossage (12) présente une section droite, perpendiculaire à l'axe principal de vibration (Z), qui a une aire supérieure à 150 mm².

4. Support antivibratoire selon l'une quelconque des revendications précédentes, dans lequel les deux côtés (9) de la paroi épaisse (7) en forme de cloche, qui sont situés en regard des faces latérales concaves (16) du bossage en élastomère, sont plus longs que les deux autres côtés (10) de ladite paroi épaisse en forme de cloche.

5. Support antivibratoire selon l'une quelconque des revendications précédentes, dans lequel la deuxième armature (2) est constituée par une plaque qui s'étend selon un plan général perpendiculaire à l'axe principal de vibration (Z) et qui présente une face dite de support, le corps en élastomère (3) formant une seule pièce avec la paroi souple (11) qui délimite la chambre de compensation (B), et ce corps en élastomère étant fixé de façon étanche sur la face de support de la deuxième armature en délimitant avec celle-ci la chambre de travail (A), la chambre de compensation (B) et le canal étranglé (C).

6. Support antivibratoire selon la revendication 5, dans lequel la deuxième armature (2) comporte un bossage (13) qui fait saillie vers la chambre de travail en regard du bossage (12) du corps en élastomère.

7. Support antivibratoire selon l'une quelconque des revendications précédentes, dans lequel le bossage (12) du corps en élastomère présente une longueur (1) sensiblement comprise entre 2,3 et 2,7 cm.

8. Support antivibratoire selon la revendication 7, dans lequel chaque côté (9) de la paroi épaisse en forme de cloche, qui est disposé en regard d'une face latérale concave du bossage (12) du corps en élastomère, est séparé des portions d'extrémité (14) de ce bossage par une distance (dl) qui, mesurée perpendiculairement à l'axe principal de vibration (Z), est sensiblement comprise entre 0,8 et 1 cm.

9. Support antivibratoire selon l'une quelconque des revendications 7 et 8, dans lequel le bossage (12) du corps en élastomère présente une hauteur (h), mesurée parallèlement à l'axe principal de vibration (Z), qui est sensiblement comprise entre 0,8 et 1,2 cm.

## Claims

1. A hydraulic antivibration support designed to be interposed between two rigid elements to damp vibration between said two elements, essentially along a main vibration axis (Z), and to support a static load parallel to said axis, the support comprising:
• first and second rigid strength members (1, 2) suitable for securing to respective ones of the two rigid elements to be united, the second strength member extending perpendicularly to the main vibration axis (Z):
• an elastomer body (3) interconnecting the two strength members (1, 2), said elastomer body having a thick bell-shaped wall (7) which extends and flares from a top (8) secured to the first strength member (1) to a base (4) secured to the second strength member (2), said wall, seen in section on a plane perpendicular to the main vibration axis (Z), having an outline which has four sides (9, 10) substantially in the form of a rectangle, the elastomer body further including an elastomer projection (12) extending in the center of the thick bell-shaped wall (7) projecting from the top (8) of said wall towards the second strength member (2), said projection having four side faces (15, 16) each facing a respective one of the sides of the thick bell-shaped wall;
• a working chamber (A) defined both by the bell-shaped thick side wall (7) and by a rigid wall secured to the second strength member and forming a counter-abutment for the above-mentioned projection; and
• a compensation chamber (B) defined at least in part by a wall that is flexible, and in permanent communication with the working chamber (A) via a narrow channel (C), the working chamber (A), the compensation chamber (B), and the narrow channel (C) all being filled with a liquid,
the antivibration support being characterized in that at least two opposite side faces (16) of the projection are concave in shape in any plane intersecting them perpendicularly to the main vibration axis (Z), the projection thus having a narrow central portion (17) between two thicker end portions (14).

2. An antivibration support according to claim 1, in which the narrow central portion (17) of the projection has a first thickness (e₁), while each of the end portions (14) of the projection has a second thickness (e₂) greater than the first thickness, with the difference between the first and second thicknesses being greater than 5 mm.

3. An antivibration support according to claim 1 or 2, in which the area of the projection (12) on a right section perpendicular to the main vibration axis (Z) is greater than 150 mm².

4. An antivibration support according to any preceding claim, in which the two sides (9) of the thick bell-shaped wall (7) situated facing the concave side faces (16) of the elastomer projection are longer than the other two sides (10) of said thick bell-shaped wall.

5. An antivibration support according to any preceding claim, in which the second strength member (2) is constituted by a plate which extends in a plane generally perpendicular to the main vibration axis (Z) and which has a "support" face, the elastomer body (3) being integral with the flexible wall (11) defining the compensation chamber (B), and said elastomer body being fixed in leakproof manner to the support face of the second strength member, co-operating therewith to define the working chamber (A), the compensation chamber (B), and the narrow channel (C).

6. An antivibration support according to claim 5, in which the second strength member (2) includes a projection (13) which projects into the working chamber towards the projection (12) of the elastomer body.

7. An antivibration support according to any preceding claim, in which the projection (12) of the elastomer body has a length (*l*) lying substantially in the range 2.3 cm to 2.7 cm.

8. An antivibration support according to claim 7, in which each side (9) of the thick bell-shaped wall facing a concave side face of the projection (12) of the elastomer body, is separated from end portions (14) of said projection by a distance (d₁) which, measured perpendicularly to the main vibration axis (Z), lies substantially in the range 0.8 cm to 1 cm.

9. An antivibration support according to claim 7 or 8, in which the projection (12) of the elastomer body is of a height (h) measured parallel to the main vibration axis (Z) which lies substantially in the range 0.8 cm to 1.2 cm.

## Patentansprüche

1. Hydraulisches, schwingungsdämpfendes Lager, das zur Dämpfung von zwischen zwei steifen Elementen im wesentlichen entlang einer Hauptschwingungsachse (Z) auftretenden Schwingungen sowie zur Aufnahme einer statischen, parallel zu dieser Achse einwirkenden Kraft zwischen den beiden steifen Elementen angeordnet ist, wobei das Lager die folgenden Bestandteile enthält:
- erste und zweite steife Abdeckelemente (1, 2), zur Befestigung an jeweils einem der beiden miteinander zu verbindenden steifen Elemente, wobei das zweite Abdeckelement sich senkrecht zur Hauptschwingungsachse (Z) erstreckt,
- einen Elastomerkörper (3), der die beiden Abdeckelemente (1, 2) miteinander verbindet und eine dicke, glockenförmige Wand (7) aufweist, die sich divergierend von einer einstückig mit dem ersten Abdeckelement (1) ausgebildeten Spitze (8) bis zu einer einstückig mit dem zweiten Abdeckelement (2) ausgebildeten Basis (4) erstreckt, wobei diese in einer senkrecht zur Hauptschwingungsachse (Z) verlaufenden Querschnittsebene einen Umriß mit vier Seiten (9, 10) aufweist, die im wesentlichen ein Rechteck bilden, wobei der Elastomerkörper u.a. einen Elastomervorsprung (12) umfaßt, der in der Mitte der glockenförmigen Wand (7) vorgesehen ist und dabei von der Spitze (8) dieser Wand aus in Richtung auf das zweite Abdeckelement (2) vorsteht, und wobei dieser Vorsprung vier Seitenflächen (15, 16) aufweist, von denen jede einer Seite (9, 10) der dicken, glockenförmigen Wand zugewandt ist,
- eine Arbeitskammer (A), die einerseits durch die dicke glockenförmige Seitenwand (7) und andererseits durch eine einstückig mit dem zweiten Abdeckelement ausgebildeten steifen Wand begrenzt wird, welche einen dem genannten Vorsprung gegenüberliegenden Anschlag bildet,
- eine Kompensationskammer (B), die wenigstens teilweise durch eine elastische Wand begrenzt wird und über einen engen Durchlaß (C) ständig mit der Arbeitskammer (A) in Verbindung steht, wobei sowohl die Arbeitskammer (A) als auch die Kompensationskammer (B) und der enge Durchlaß (C) mit einer Flüssigkeit gefüllt sind,
dadurch gekennzeichnet, daß wenigstens zwei (16) einander gegenüberliegende Seitenflächen des Vorsprungs in jeder senkrecht zur Hauptschwingungsachse (Z) verlaufenden Querschnittsebene eine konkave Form aufweisen, wodurch der Vorsprung einen von zwei dikkeren Endbereichen (14) eingerahmten schmalen Mittelbereich (17) besitzt.

2. Schwingungsdämpfendes Lager nach Anspruch 1, wobei der schmale Mittelbereich (17) des Vorsprungs eine erste Dicke (el) aufweist, während die Endbereiche (14) des Vorsprungs jeweils eine zweite Dicke (e2) besitzen, die größer ist als die erste Dicke, wobei zwischen der ersten und der zweiten Dicke ein Unterschied von mehr als 5 mm besteht.

3. Schwingungsdämpfendes Lager nach einem der Ansprüche 1 und 2, wobei der Vorsprung (12) senkrecht zur Hauptschwingungsachse (Z) eine Querschnittsfläche von über 150 mm² aufweist.

4. Schwingungsdämpfendes Lager nach einem der vorhergehenden Ansprüche, wobei die beiden den konkaven Seitenflächen (16) des Elastomervorsprungs zugewandten Seiten (9) der dicken glockenförmigen Wand (7) länger sind, als die beiden anderen Seiten (10) der dicken glockenförmigen Wand.

5. Schwingungsdämpfendes Lager nach einem der vorhergehenden Ansprüche, wobei das zweite Abdeckelement (2) durch eine Platte gebildet wird, die sich entlang einer im wesentlichen senkrecht zur Hauptschwingungsachse (Z) verlaufenden Ebene erstreckt und eine als Stützfläche dienende Oberfläche umfaßt, wobei weiterhin der Elastomerkörper (3) einstückig mit der die Kompensationskammer (B) begrenzenden elastischen Wand (11) ausgebildet und auf der Stützfläche des zweiten Abdeckelements abdichtend befestigt ist und dabei zusammen mit dieser Stützfläche die Arbeitskammer (A), die Kompensationskammer (B) und den engen Durchlaß (C) begrenzt.

6. Schwingungsdämpfendes Lager nach Anspruch 5, wobei das zweite Abdeckelement (2) einen Vorsprung (13) aufweist, der in Richtung auf den Vorsprung (12) des Elastomerkörpers in die Arbeitskammer hineinragt.

7. Schwingungsdämpfendes Lager nach einem der vorhergehenden Ansprüche, wobei der Vorsprung (12) des Elastomerkörpers eine Länge (l) von zwischen 2,3 und 2,7 cm aufweist.

8. Schwingungsdämpfendes Lager nach Anspruch 7, wobei jede einer konkaven Seitenfläche des Vorsprungs (12) des Elastomerkörpers zugewandte Seite (9) der dicken glockenförmigen Wand senkrecht zur Hauptschwingungsachse (Z) einen Abstand (dl) von zwischen 0,8 und 1 cm zu den Endbereichen (14) dieses Vorsprungs einhält.

9. Schwingungsdämpfendes Lager nach einem der Ansprüche 7 und 8, wobei der Vorsprung (12) des Elastomerkörpers parallel zur Hauptschwingungsachse (Z) eine Höhe (h) von zwischen 0,8 und 1,2 cm besitzt.
